# EUROPÄISCHE PATENTSCHRIFT

(11) **EP 1 335 138 B1**
(45) Veröffentlichungstag und Bekanntmachung des Hinweises auf die Patenterteilung: **28.03.2007**
(21) Anmeldenummer: 03002251.1
(22) Anmeldetag: 01.02.2003
(51) Int. Cl.: F16B 7/18, F16B 7/22

(54) **Profilstabverbinder**
Profiled bar connection
Attache pour barre profilée

(30) Priorität: 09.02.2002 DE 20201977 U
(43) Veröffentlichungstag der Anmeldung: 13.08.2003
(73) Patentinhaber: RK Rose + Krieger GmbH & Co. KG Verbindungs- und Positioniersysteme, D-32423 Minden (DE)
(72) Erfinder: Meyer, Ralf-Hermann, 31592 Stolzenau (DE); Lampert, Rolf, Dipl.Ing., 32584 Löhne (DE); Buchholz, Bernd, Dr.Ing., 32369 Rahden (DE); Schunke, Kurt, 32427 Minden (DE)
(74) Vertreter: Dantz, Jan Henning

(56) Entgegenhaltungen:
- EP-A- 0 478 877
- DE-A- 4 244 396
- DE-C- 4 137 079
- DE-U- 9 304 053
- FR-A- 2 440 486

## Beschreibung

Die vorliegende Erfindung betrifft eine Verbindung gemäß dem Oberbegriff des Anspruchs 1.

Eine derartige Verbindung ist beispielsweise aus der DE 298 22 303 U1 bekannt.

Der darin gezeigte und beschriebene Profilstabverbinder weist ein Anschlußteil auf, das sich an der Hinterschneidung der Längsnut des zweiten Profilstabes abstützt.

Zum Verspannen bzw. Festklemmen des zweiten Profilstabes am ersten, der stirnseitig an einer Längsseite des zweiten Profilstabes anliegt, sind Klemmteile vorgesehen, in die jeweils eine Schraube eingedreht ist, die sich an dem zugeordneten, gegenüber dem Anschlußteil abgesetzten Ansatz abstützt, wobei sich das Klemmteil an die Hinterschneidung anpreßt.

Konstruktionsbedingt weist dieser Profilstabverbinder einige erhebliche Nachteile auf, die sowohl einer befriedigenden Verwendung wie auch einer ausreichenden Belastungsfähigkeit entgegenstehen.

Da sowohl das Anschlußteil wie auch die Klemmteile an der Hinterschneidung der entsprechenden Längsnut anliegen und von daher breiter sind als die offene Seite der Längsnut, ist eine Verbindung der beiden Profilstäbe nur möglich, wenn der zweite Profilstab auf die zu einer Baueinheit zusammengefügte Profilstabverbindung aufgeschoben wird, wobei das Anschlußteil zuvor stirnseitig fest mit dem ersten Profilstabes verbunden ist. Der zweite Profilstab muß also von seiner offenen Stirnseite her auf das Anschlußteil aufgeschoben werden.

Da häufig relativ lange Profilstäbe zum Einsatz kommen, ist eine solche Montage äußerst umständlich und vielfach gar nicht möglich.

Die beidseitig des Anschlußteiles sich erstreckenden Ansätze sind prinzipiell Bestandteile des Anschlußteiles, wobei ihre Unterfläche gemeinsam verläuft.

Um die Klemmteile an die Hinterschneidung der Längsnut pressen zu können, ist eine entsprechend schlanke Höhendimensionierung des Ansatzes, an dem sich die in das zugeordnete Klemmteil eingeschraubte Schraube abstützt, erforderlich, da sowohl für die Dimensionierung der Höhe des Ansatzes als auch für die Höhe des die Hinterschneidung hintergreifenden Nutsteines des Klemmteiles maximal die Höhe der Längsnut in dem Bereich von der Hinterschneidung bis zum Nutengrund zur Verfügung steht.

Aus naheliegenden Gründen ist die dadurch nur beschränkt mögliche Dimensionierung nicht geeignet, ausreichende Belastungskräfte aufzunehmen. Da kein ausreichend großes Widerstandsmoment des Ansatzes vorhanden ist, kommt es durch das durch die Schraube des Klemmelementes auf den Ansatz aufgebrachte Biegemoment zu einer Verbiegung im Anschlußbereich des Ansatzes zum Anschlußteil, selbst wenn die Spannkraft der Schraube relativ klein ist.

Aufgrund der beengten Platzverhältnisse, d. h., aufgrund des geringen Abstandes zwischen dem Ansatz und dem Nutengrund führt dies zu einer Funktionsbeeinträchtigung, weil durch die Verbiegung eine leichte Beweglichkeit insbesondere nach einem Lösen der Profilstabverbindung nicht mehr gewährleistet ist.

Der vorliegenden Erfindung liegt daher die Aufgabe zugrunde, einen Profilstabverbinder der gattungsgemäßen Art so auszubilden, daß seine Handhabungsfähigkeit verbessert und somit eine Montage bzw. Demontage der Profilstäbe einfacher wird und daß die Belastbarkeit der Verbindung erhöht wird.

Diese Aufgabe wird durch eine Verbindung gelöst, der die Merkmale des Anspruchs 1 aufweist.

Durch diese konstruktive Ausbildung des Profilstabverbinders wird zunächst eine sehr einfache Montage bzw. Verbindung der beiden Profilstäbe möglich.

Dadurch, daß erfindungsgemäß das Anschlußteil in seiner Breite maximal der Breite der offenen Seite der Längsnut entspricht, kann nun der zweite Profilstab auf den Profilverbinder aufgesetzt werden, und zwar an genau der Stelle, an der er mit dem ersten Profilstab verbunden werden soll. Das Anschlußteil liegt dann ausschließlich an der ersten Stirnseite des ersten Profilstabes an, während die Klemmung durch das zugeordnete Klemmelement erreicht wird, dessen Nutstein an der Hinterschneidung der Längsnut des zweiten Profilstabes anliegt und durch die durch das Klemmteil geführte Schraube, die sich an dem Ansatz abstützt, an die Hinterschneidung gepreßt wird.

Selbstverständlich kann beidseitig des Anschlußteiles ein Ansatz vorgesehen sein mit jeweils einem zugeordneten Klemmteil. Denkbar ist aber auch, ein Anschlußteil mit lediglich einem Ansatz zu versehen, wobei dann zur Verbindung der beiden Profilstäbe mehrere solcher Profilstabverbinder zum Einsatz kommen.

Neben dem genannten Handhabungsvorteil bei der Verbindung der beiden Profilstäbe ist besonders die gegenüber dem Stand der Technik wesentlich höhere Belastungsfähigkeit hervorzuheben. Diese resultiert im wesentlichen daraus, daß der Ansatz in Belastungsrichtung, also in seiner Höhe sich über die gesamte Höhe des Anschlußteiles oder nahezu über die gesamte Höhe erstrecken kann, d.h., die Höhe kann sich aus der Gesamttiefe der Längsnut ergeben, und nicht nur aus einem Teil der Längsnut, der durch die Hinterschneidung und den Nutengrund begrenzt wird.

Zweckmäßigerweise ist der Übergang zwischen dem Ansatz und der an der Stirnseite des ersten Profilstabes anliegenden Seite des Anschlußteiles nur geringfügig oder planeben, was insbesondere fertigungstechnische Vorteile mit sich bringt.

Nach einer vorteilhaften Weiterbildung der Erfindung ist vorgesehen, daß der Ansatz auf seiner dem ersten Profilstab abgewandten, dem Nutengrund der Längsnut zugewandten Seite abgeschrägt ist, und zwar zum Anschlußbereich mit dem Anschlußteil hin ansteigend.

Weiter kann das Anschlußteil mit Zentriermitteln, beispielsweise mit Zentriernasen versehen sein, die auf der der Stirnseite des ersten Profilstabes zugewandten Seite angeformt sind und die eine lagegenaue Fixierung bei der Montage des Anschlußteiles, d. h. beim Anschrauben an den ersten Profilstab bilden.

Nach einem weiteren Gedanken der Erfindung ist vorgesehen, daß das Klemmteil zwischen dem Nutenstein, der an der Hinterschneidung der Längsnut des zweiten Profilstabes anliegt und einem Aufnahmeklotz, in den die Schraube eingedreht ist und der in einer Längsnut des ersten Profilstabes einliegt, ein zylinderförmiger Schaft vorgesehen ist, dessen Durchmesser der Breite des im Querschnitt quadratischen Aufnahmeklotzes sowie der Breite der offenen Seite der Längsnut entspricht.

Diese Ausbildung erlaubt ein problemloses Einsetzen des Klemmteiles in die Längsnut und dessen Verdrehen bis in eine Position, in der der Nutenstein mit seinen Anlageflächen an der Hinterschneidung der Längsnut anliegt. Dabei ist der Nutenstein, dessen Anlageflächen für die Hinterschneidung jeweils eine kreisbogenförmige Kontur aufweist, an zwei sich gegenüberliegenden Seiten abgeflacht, wobei die Breite des Nutensteins in diesem Bereich der Breite des Aufnahmeklotzes entspricht.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Profilstabverbinder in Explosivdarstellung,
- Figur 2: einen teilweise montierten Profilstabverbinder in einer perspektivischen Ansicht,
- Figur 3: den Profilstabverbinder in einer montierten Funktionsstellung in einer geschnittenen Teil-Seitenansicht,
- Figur 4: einen Teil des Profilstabverbinders in einer geschnittenen Teil-Vorderansicht,
- Figur 5: ein weiteres Ausführungsbeispiel eines teilweise montierten Profilstabverbinders in einer perspektivischen Ansicht.

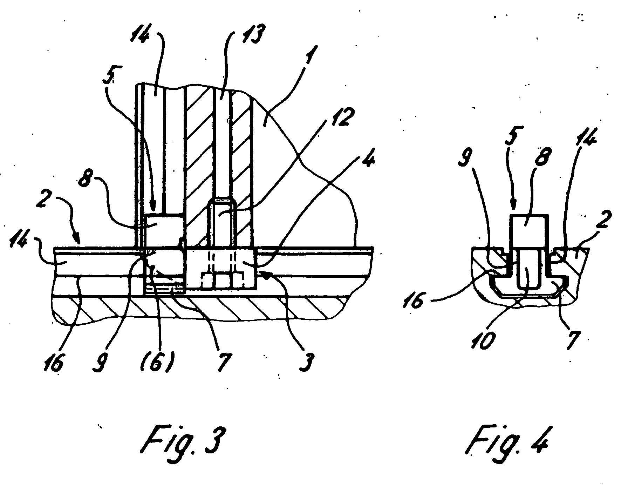

In den Figuren ist ein Profilstabverbinder dargestellt, der insgesamt mit dem Bezugszeichen 3 versehen ist und durch den zwei winklig, vorzugsweise rechtwinklig zueinander stehende Profilstäbe 1, 2 miteinander verbindbar sind (Figur 3).

Dieser Profilstabverbinder 3 besteht aus einem Anschlußteil 4, das klotzartig ausgebildet ist und das mittels einer Schraube 12, die in einen Schraubkanal 13 des ersten Profilstabes 1 eindrehbar ist, an der Stirnseite dieses ersten Profilstabes 1 festgelegt wird.

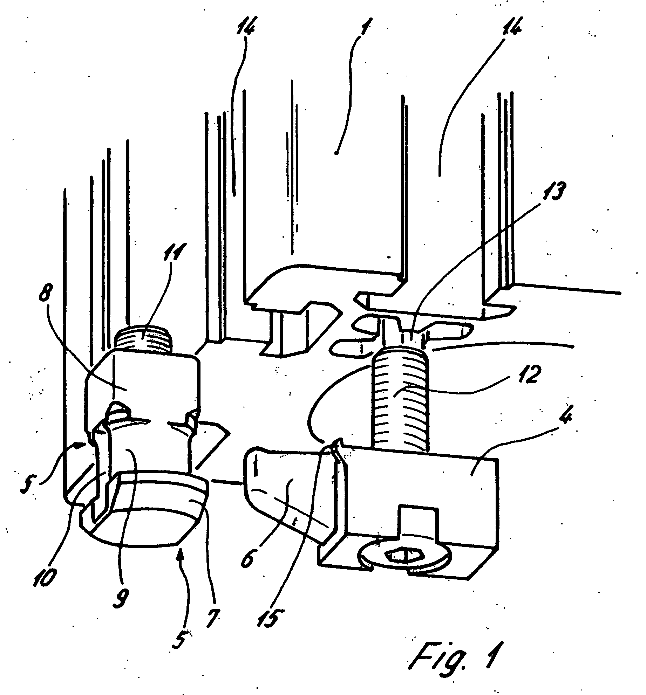

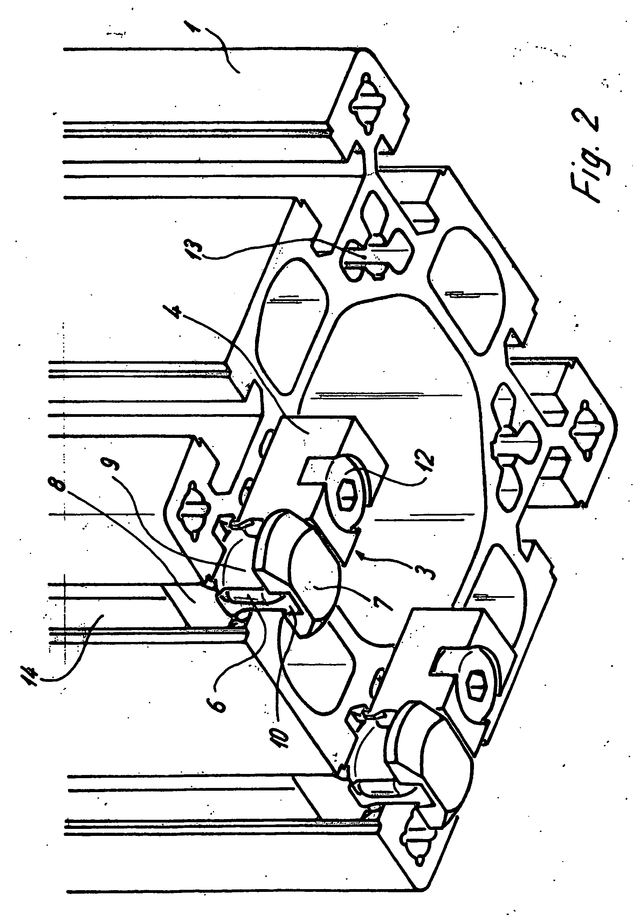

In dem in den Figuren 1 bis 3 gezeigten Ausführungsbeispiel ist in jedem Eckenbereich der einen Stirnseite des Profilstabes 1 ein Profilstabverbinder 3 vorgesehen, wobei in der Figur 2 lediglich zwei Profilstabverbinder 3 gezeigt sind.

Zur Zentrierung des Anschlußteiles 4, d. h. zur lagegenauen Fixierung bei der Festlegung am ersten Profilstab 1 sind an dem Anschlußteil 4 Zentriernasen 15 angeordnet, die in die stirnseitige Öffnung einer Längsnut 14 des ersten Profilstabes 1 eingreifen.

Weiter ist an dem Anschlußteil 4 ein Ansatz 6 angeformt, der übergangslos mit der der Stirnfläche des ersten Profilstabes 1 zugewandten Seite des Anschlußteiles 4 planeben ausgebildet ist.

Gegenüber dem Anschlußteil 4 ist der Ansatz 6 schmaler ausgebildet und auf seiner der Stirnseite des ersten Profilstabes abgewandten Seite abgeschrägt, wobei diese Schräge zum Anschlußteil 4 hin gerichtet ansteigt.

Auf den Ansatz 6 ist ein Klemmteil 5 aufsteckbar, wozu ein Schlitz 10 vorgesehen ist, durch den das Klemmteil 5 auf den Ansatz 6 aufgeschoben wird. Auf seiner dem ersten Profilstab zugewandten Seite ist das Klemmteil 5 als Aufnahmeklotz 8 ausgebildet, in den eine Schraube 11 eingedreht ist, die sich an dem Ansatz 6 abstützt.

Gegenüberliegend dem Aufnahmeklotz 8 ist ein Nutstein 7 vorgesehen, der im Montagefall eine Hinterschneidung 16 einer Längsnut 14 des zweiten Profilstabes 2 hintergreift.

Zwischen dem Nutstein 7 und dem Aufnahmeklotz 8 ist ein zylinderförmiger Schaft 9 vorgesehen, während der Nutstein 7 diesem Schaft 9 gegenüber zweiseitig vorsteht und so Anlageflächen bildet, mit der das gesamte Klemmteil an den Hinterschneidungen 16 des zweiten Profilstabes 2 anliegt.

Erfindungsgemäß entspricht die Breite des Aufnahmeteiles 4 der Breite der Längsnut 14 im Bereich ihrer offenen, der Stirnseite des ersten Profilstabes 2 zugewandten Seite. Ebenso wie die Breite des Aufnahmeklotzes 8 und der äußere Durchmesser des Schaftes 9.

Der Nutstein 7 ist in den Austrittsbereichen des Schlitzes 10 entsprechend dem Außendurchmesser des Schaftes 9 bemessen, so daß die Breite des Nutsteines 7 in diesem Bereich ebenfalls etwa der Breite der offenen Seite der Längsnut 14 entspricht.

Im vorliegenden Beispiel ist der Schlitz 10 durch einen geschlossenen Boden des Nutsteines 7 begrenzt. Denkbar ist jedoch auch den Schlitz 10 durch den Nutstein 7 hindurchzuführen, so daß der Schlitz 10 auch von unten her offen ist.

Zur Montage des Profilstabverbinders 3 insgesamt bzw. Verbindung der beiden Profilstäbe 1, 2 wird zunächst das Anschlußteil 4 mittels der Schraube 12 stirnseitig am ersten Profilstab 1 befestigt.

Danach wird der zweite Profilstab 2 mit seiner Längsnut 14 gegen die Stirnseite des ersten Profilstabes 1 gesetzt, wobei gleichzeitig das Anschlußteil 4 in der Längsnut 14 einliegt.

Das Klemmteil 5 wird dann in die Längsnut 14 eingesetzt, wobei es zunächst in Längsrichtung des Nutsteines 7 in der Längserstreckung der Längsnut 14 verläuft. Durch anschließendes Drehen hintergreifen die Auflageflächen des Nutsteines 7 die gegenüberliegenden Hinterschneidungen 16 der Längsnut 14. In dieser Position wird das Klemmteil 5 auf den Ansatz 6 des Anschlußteiles 4 aufgeschoben, wobei dieses, wie erwähnt, den Schlitz 10 durchtritt. Dabei kommt die obere Begrenzung des Schlitzes 10, die gleichzeitig die Unterseite des Aufnahmeklotzes 8 bildet, auf der Oberseite des Ansatzes 6 zur Anlage, während der Anschlußklotz 8 vollständig in der Längsnut 14 des ersten Profilstabes 1 einliegt. Von dort aus kann die Schraube 11 (Figur 1) so in den Aufnahmeklotz 8 eingedreht werden, daß sie an dem Ansatz 6 anliegt unter gleichzeitiger Anpressung der Auflageflächen des Nutsteines 7 an die Hinterschneidungen 16.

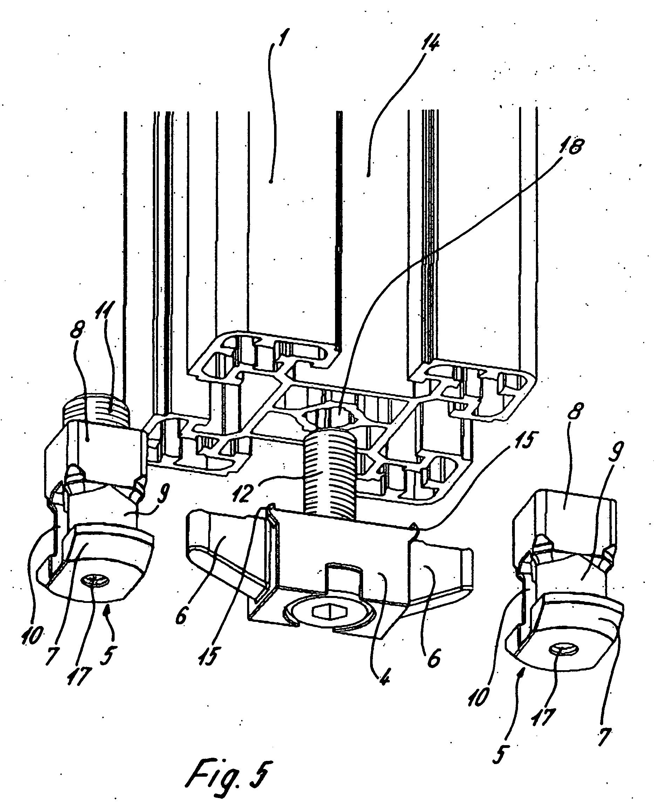

In seinem grundsätzlichen Aufbau entspricht der als weiteres Ausführungsbeispiel in der Figur 5 dargestellte Profilstabverbinder 3 dem in den Figuren 1 bis 3 gezeigten. Funktionsgleiche Bauteile sind daher mit gleichen Bezugszeichen versehen.

Dieser Profilstabverbinder 3 ist mittels der durch das Anschlußteil 4 geführten Schraube 12, die in einen zentralen Schraubkanal 18 des ersten Profilstabes 1 eindrehbar ist, zentrisch an diesem befestigbar. Anstelle eines Ansatzes 6 am Anschlußteil 4 sind zwei sich gegenüberliegende Ansätze 6 vorgesehen, auf die jeweils ein Klemmteil 5 aufsteckbar ist.

Weiter ist erkennbar, daß an der Unterseite des geschlossenen Bodens jedes Nutsteines 7 eine Aufnahme 17 vorgesehen ist, in die ein Federelement, bspw. eine Druckfeder, einsetzbar ist, das sich am Grund der Längsnut 14 des in der Figur 5 nicht dargestellten zweiten Profilstabes 2 abstützt und dabei den Nutstein 17 gegen die Hinterschneidung 16 drückt, so daß das Klemmteil 5 vor einer Verspannung mit dem Ansatz 6 zur Montageerleichterung fixiert ist.

## Patentansprüche

1. Verbindung zweier winklig zueinander stehender Profilstäbe (1,2), deren zumindest eine Längsseite mit mindestens einer hinterschnittenen Längsnut (14) versehen sind, mit einem Anschlußteil (4), das an der Stirnseite eines ersten (1) der beiden Profilstäbe befestigt ist und mindestens einem Klemmteil (5), das die zugeordnete Längsnut (14) des zweiten Profilstabes (2) mit einem angeschlossenen Nutstein (7) klemmend hintergreift, wozu in das Klemmteil (5) eine sich in Längsrichtung der Längsnut (14) des ersten Profilstabes erstreckende Schraube (11) gedreht ist, die sich an einem an das Anschlußteil (4) angeformten Ansatz (6) abstützt, **dadurch gekennzeichnet, dass** das Anschlussteil (4) in seiner maximalen Breite etwa der Breite der offenen Seite der Längsnut (14) des zweiten Profilstabes (2) entspricht und daß der als Kragarm ausgebildete Ansatz (6) in einem Schlitz (10) des Klemmteiles (5) einliegt.

2. Verbindung nach Anspruch 1, **dadurch gekennzeichnet, daß** der Ansatz (6) zumindest bereichsweise etwa der Höhe des Anschlußteiles (4) entspricht.

3. Verbindung nach Anspruch 1 oder 2, **dadurch gekennzeichnet, daß** der Ansatz (6) auf seiner dem ersten Profilstab abgewandten Seite abgeschrägt ist, wobei die Schräge zum Anschlußteil (4) hin ansteigt.

4. Verbindung nach einem der Ansprüche 1-3, **dadurch gekennzeichnet, daß** die dem ersten Profilstab (1) zugewandten Flächen des Anschlußteiles (4) und des Ansatzes (6) übergangslos planeben ausgebildet sind.

5. Verbindung nach Anspruch 1, **dadurch gekennzeichnet, daß** das Anschlußteil (4) mit Zentriernasen (15) versehen ist, die in eine Längsnut (14) des ersten Profilstabes (1) eingreifen.

6. Verbindung nach Anspruch 1, **dadurch gekennzeichnet, daß** der Schlitz (10) des Klemmteiles (5) endseitig durch den Nutstein (7), einen Boden bildend, verschlossen ist.

7. Verbindung nach Anspruch 1, **dadurch gekennzeichnet, daß** auf der dem Nutstein (7) gegenüberliegenden Seite des Klemmteiles (5) ein Anschlußklotz (8) vorgesehen ist, in den die Schraube (11) eingedreht ist und der den Schlitz (10) endseitig begrenzt.

8. Verbindung nach Anspruch 7, **dadurch gekennzeichnet, daß** die Breite des Anschlußklotzes (8) etwa der Breite der offenen Seite der Längsnut (14) des ersten Profilstabes (1) entspricht.

9. Verbindung nach Anspruch 7 oder 8, **dadurch gekennzeichnet, daß** der Schlitz (10) in einem zylinderförmigen Schaft (9) vorgesehen ist, dessen Außendurchmesser etwa der Breite des Anschlußkotzes (8) entspricht.

10. Verbindung nach Anspruch 9, **dadurch gekennzeichnet, daß** eine Breite des Nutsteines (7) der Breite des Anschlußklotzes (8) bzw. der Breite der offenen Längsnut (14) des zweiten Profilstabes (2) entspricht.

11. Verbindung einem der Ansprüche 1-10, **dadurch gekennzeichnet, daß** die die Hinterschneidung (16) der Längsnut (14) des zweiten Profilstabes hintergreifende Auflageflächen des Nutsteins (7) eine kreisbogenförmige Außenkontur aufweisen.

12. Verbindung nach Anspruch 1, **dadurch gekennzeichnet, daß** die Höhe des Anschlußteiles (4) etwa der Tiefe der Längsnut (14) des zweiten Profilstabes (2) entspricht.

13. Verbindung nach Anspruch 6, **dadurch gekennzeichnet, daß** der Nutstein (7) unterseitig mit einem Federelement versehen ist.

## Claims

1. Connection of two profiled bars (1, 2) which are at an angle to each other and at least one longitudinal side of which is provided with at least one undercut longitudinal groove (14), with a connecting part (4), which is fastened to the end side of a first (1) of the two profiled bars, and with at least one clamping part (5) which engages in a clamping manner by means of a connected slide block (7) behind the associated longitudinal groove (14) of the second profiled bar (2), for which purpose a screw (11) which extends in the longitudinal direction of the longitudinal groove (14) of the first profiled bar and is supported on an extension (6) integrally formed on the connecting part (4) is screwed into the clamping part (5), **characterized in that** the maximum width of the connecting part (4) approximately corresponds to the width of the open side of the longitudinal groove (14) of the second profiled bar (2), and **in that** the extension (6), which is designed as a cantilever, is located in a slot (10) of the clamping part (5).

2. Connection according to Claim 1, **characterized in that** the extension (6) at least in some regions approximately corresponds to the height of the connecting part (4).

3. Connection according to Claim 1 or 2, **characterized in that** the extension (6) is bevelled on its side facing away from the first profiled bar, with the bevel rising towards the connecting part (4).

4. Connection according to one of Claims 1-3, **characterized in that** those surfaces of the connecting part (4) and of the extension (6) which face the first profiled bar (1) are of planar design without any transition.

5. Connection according to Claim 1, **characterized in that** the connecting part (4) is provided with centring lugs (15) which engage in a longitudinal groove (14) of the first profiled bar (1).

6. Connection according to Claim 1, **characterized in that** the slot (10) of the clamping part (5) is closed on the end side by the slide block (7), forming a base.

7. Connection according to Claim 1, **characterized in that** a connecting block (8), into which the screw (11) is screwed and which bounds the slot (10) on the end side, is provided on that side of the clamping part (5) which lies opposite the slide block (7).

8. Connection according to Claim 7, **characterized in that** the width of the connecting block (8) approximately corresponds to the width of the open side of the longitudinal groove (14) of the first profiled bar (1).

9. Connection according to Claim 7 or 8, **characterized in that** the slot (10) is provided in a cylindrical shank (9), the outside diameter of which approximately corresponds to the width of the connecting block (8).

10. Connection according to Claim 9, **characterized in that** a width of the slide block (7) corresponds to the width of the connecting block (8) or to the width of the open longitudinal groove (14) of the second profiled bar (2).

11. Connection according to one of Claims 1-10, **characterized in that** those supporting surfaces of the slide block (7) which engage behind the undercut (16) of the longitudinal groove (14) of the second profiled bar have an outer contour in the form of an arc of a circle.

12. Connection according to Claim 1, **characterized in that** the height of the connecting part (4) approximately corresponds to the depth of the longitudinal groove (14) of the second profiled bar (2).

13. Connection according to Claim 6, **characterized in that** the underside of the slide block (7) is provided with a spring element.

## Revendications

1. Attache pour deux barres profilées (1, 2) formant un angle entre elles, dont au moins un côté longitudinal est muni d'au moins une rainure longitudinale (14) en contre-dépouille, avec une partie de raccordement (4) qui est fixée sur la face frontale d'une première (1) des deux barres profilées, et au moins une partie de blocage (5) qui saisit par l'arrière avec effet de blocage la rainure longitudinale (14) associée de la deuxième barre profilée (2) avec un coulisseau (7) raccordé, une vis (11) s'étendant dans la direction longitudinale de la rainure longitudinale (14) de la première barre profilée étant vissée dans la partie de blocage (5), vis qui s'appuie sur une embase (6) formée sur la partie de raccordement (4), **caractérisée en ce que** la partie de raccordement (4) a une largeur maximale qui correspond approximativement à la largeur du côté ouvert de la rainure longitudinale (14) de la deuxième barre profilée (2) et **en ce que** l'embase (6) conformée en bras en console pénètre dans une fente (10) de la partie de blocage (5).

2. Attache selon la revendication 1, **caractérisée en ce que** l'embase (6) correspond au moins par endroits approximativement à la hauteur de la partie de raccordement (4).

3. Attache selon la revendication 1 ou 2, **caractérisée en ce que** l'embase (6) est biseautée sur son côté opposé à la première barre profilée, le biseau montant en direction de la partie de raccordement (4).

4. Attache selon l'une des revendications 1 à 4, **caractérisée en ce que** les surfaces de la partie de raccordement (4) et de l'embase (6) tournées vers la première barre profilée (1) sont réalisées planes sans transition.

5. Attache selon la revendication 1, **caractérisée en ce que** la partie de raccordement (4) est munie de nez de centrage (15) qui s'engagent dans une rainure longitudinale (14) de la première barre profilée (1).

6. Attache selon la revendication 1, **caractérisée en ce que** la fente (10) de la partie de blocage (5) est fermée à l'extrémité par le coulisseau (5) en formant un fond.

7. Attache selon la revendication 1, **caractérisée en ce que** du côté de la partie de blocage (5) opposé au coulisseau (7), il est formé un bloc de raccordement (8) dans lequel est vissée la vis (11) et qui limite la fente (10) à l'extrémité.

8. Attache selon la revendication 7, **caractérisée en ce que** la largeur du bloc de raccordement (8) correspond approximativement à la largeur du côté ouvert de la rainure longitudinale (14) de la première barre profilée (1).

9. Attache selon la revendication 7 ou 8, **caractérisée en ce que** la fente (10) est prévue dans une tige cylindrique (9) dont le diamètre extérieur correspond approximativement à la largeur du bloc de raccordement (8).

10. Attache selon la revendication 9, **caractérisée en ce qu'**une largeur du coulisseau (7) correspond à la largeur du bloc de raccordement (8) resp. à la largeur de la rainure longitudinale ouverte (14) de la deuxième barre profilée (2).

11. Attache selon l'une des revendications 1 à 10, **caractérisée en ce que** les surfaces d'appui du coulisseau (7) qui saisissent par l'arrière la contre-dépouille (16) de la rainure longitudinale (14) de la deuxième barre profilée présentent un contour extérieur en arc de cercle.

12. Attache selon la revendication 1, **caractérisée en ce que** la hauteur de la partie de raccordement (4) correspond approximativement à la profondeur de la rainure longitudinale (14) de la deuxième barre profilée (2).

13. Attache selon la revendication 6, **caractérisée en ce que** le coulisseau (7) est muni d'un élément à ressort sur sa face inférieure.
